# EUROPEAN PATENT APPLICATION

(11) **EP 4 590 018 A1**
(43) Date of publication of application: **23.07.2025**
(21) Application number: 23859284.4
(22) Date of filing: 28.08.2023
(51) Int. Cl.: H04W 28/02, H04W 28/06

(54) **METHOD AND APPARATUS FOR USE IN WIRELESS COMMUNICATION**

(30) Priority: 02.09.2022 CN 202211069429
(71) Applicant: Apogee Networks, LLC, Dallas, TX 75201 (US)
(72) Inventor: ZHANG, Jinfang, Shanghai 201206 (CN); ZHANG, Xiaobo, Shanghai 201206 (CN)
(74) Representative: Gunzelmann, Rainer
(86) International application number: PCT/CN2023/115175
(87) International publication number: WO 2024/046252

(57) **Abstract**

Disclosed in the present application are a method and apparatus for wireless communication. The first node receiving a first data unit set at a first protocol entity; starting a first timer as a response to receive the first data unit; executing a first operation set as a response to the first timer expiration, the first operation set includes sending a first indication to a second protocol entity, the first indication is used to indicate discarding a second data unit set; wherein the first data unit is one data unit in the first data unit set; at least part of the data unit in the first data unit set is used to generate the second data unit set; the first protocol entity is configured to non-signaling radio bearer; the protocol layer in which the first protocol entity is located is above the protocol layer in which the second protocol entity is located; and the first protocol entity is a protocol entity in the layer above MAC. This application may be effective to improve system capacity.

## Description

### Technical Field

The present application relates to methods and apparatuses in a wireless communication system, and more particularly, to methods and apparatuses for supporting interactive delay-sensitive services in wireless communication.

### Background Technology

In the future, the application scenarios of wireless communication systems will become more diverse, and the different application scenarios impose different performance requirements on the system. To meet the different performance needs of a variety of application scenarios, it was decided at the #72 plenary meeting of 3rd Generation Partner Project (3GPP) Radio Access Network (RAN) to study a new air interface technology (New Radio (NR)). Subsequently, at the #75 plenary meeting of 3GPP RAN, the Work Item (WI) for the New Radio (NR) technology was approved, marking the beginning of the standardization process for NR.

In response to the rapidly evolving use cases and services of Extended Reality (XR) and Cloud Gaming (CG), 3GPP RAN1 initiated a Study Item (SI) in Release 17 titled "Study on XR Evaluations for NR." The study identified XR and CG as important use cases and services for Release 18 and subsequent releases. XR and CG refer to various types of augmented, virtual, and mixed environments, which enable human-machine interaction with the assistance of handheld and wearable User Equipment (UE). Many XR and CG use cases exhibit quasi-periodic and high data rate traffic characteristics, while also imposing stricter packet delay budget (PDB) requirements, posing a series of challenges for NR.

### Summary of Invention

Through research, the inventors have found that XR traffic streams include various types of data, such as video, audio, and data for controlling various sensors, which exhibit certain temporal correlation and/or codec correlation. Correlated data forms a data set that needs to be processed together at the application layer, or the timeout/loss of one data packet may affect the processing of the remaining packets. The correlated data may be either uplink or downlink. In the current RAN, the correlation between data packets is not perceived, and each data packet is processed and transmitted independently, making it difficult to meet the requirements of XR services.

To address the above issue, the present application discloses a solution that, for services with strict PDB requirements, discards data packets that cannot meet the PDB along with their associated packets, thus release transmission resources for use by other UEs, thereby effectively improving system capacity. In the absence of conflicts, the embodiments of the present application and the features in the embodiments may be combined with each other arbitrarily. Furthermore, although the original intent of the present application is directed toward the Uu air interface, it can also be applied to the PC5 air interface. Furthermore, although the original intent of the present application is directed toward the terminal and base station scenarios, it is also equally applicable to the relay and base station scenario, achieving similar technical effects as in the terminal and base station scenarios. In addition, adoption of a unified solution across different scenarios (including, but not limited to, V2X scenarios and terminal-to-base station communication scenarios) can also help reduce hardware complexity and costs. In particular, the interpretation of terminology, nouns, functions, variables (if not otherwise specified) in the present application may refer to the definitions in the 3GPP specification protocol TS36 series, TS38 series, and TS37 series.

The present application discloses a method used in a first node for wireless communication, wherein it comprises:
receiving a first data unit set at a first protocol entity;
starting a first timer as a response to receive a first data unit;
executing a first operation set as a response to the first timer expiration, the first operation set sending a first indication to a second protocol entity, the first indication is used to indicate discarding a second data unit set;
wherein the first data unit is one data unit in the first data unit set; at least part of the data unit in the first data unit set is used to generate the second data unit set; the first protocol entity is configured to non-signaling radio bearer; the protocol layer in which the first protocol entity is located is above the protocol layer in which the second protocol entity is located; and the first protocol entity is a protocol entity in the layer above MAC.

As an embodiment, the present application is applicable to delay-sensitive services.

As an embodiment, the present application is applicable to the XR business.

As an embodiment, the present application is applicable to the transmitting side.

As an embodiment, the present application is applicable to scenarios where the first protocol entity and the second protocol entity are located on the same node; however, the present application is also applicable to scenarios where the first protocol entity and the second protocol entity are located on different nodes.

As an embodiment, issues to be addressed by the present application include: How to support the processing of user plane packets with correlation.

As an embodiment, the above method increases the flexibility of wireless transmission by sending a first indication, which is beneficial for supporting more diverse services.

As an embodiment, the above method can reduce the transmission of unnecessary data units by sending a first indication, thereby improving system capacity.

As an embodiment, the above method can save power consumption at the first node by sending a first indication.

As an embodiment, the above method can simplify the processing at the first node by sending a first indication.

As an embodiment, the protocol entity in the present application is a module.

As an embodiment, the protocol entity in the present application is a module that performs a set of functions.

As an embodiment, the protocol entity in the present application is a hardware module that performs a set of functions.

As an embodiment, the protocol entity in the present application is a software module that performs a set of functions.

According to one aspect of the present application, comprises:
a first identity is used to indicate the first data unit set;
wherein the first identity is used to indicate that the first data unit set comprises: Each data unit in the first data unit set includes the first identity.

According to one aspect of the present application, comprises:
at least a first information set is used to indicate the first data unit set;
wherein the first information set includes at least two of the following three: a start identity, an end identity, and a total number of data units.

According to one aspect of the present application, comprises:
discarding a third data unit set at the second protocol entity;
wherein the third data unit set is a subset of the second data unit set, any data unit in the third data unit set or a segment of the data unit has not been submitted to a lower layer than the protocol layer where the second protocol entity is located.

As an embodiment, the above methods can reduce the transmission of useless data units and increase the system capacity.

According to one aspect of the present application, comprises:
The time of receipt of the first data unit is no later than the time of receipt of other data units in the first data unit set other than the first data unit.

As an embodiment, the above method is applicable to the scenarios where the first node is a business source.

As an embodiment, the above method is applicable to the scenarios where the first data unit set is not out of order upon reaching the first node.

According to one aspect of the present application, comprises:
Each data unit in the first data unit set includes a second identity, the value of the second identity of the first data unit is not greater than the value of the second identity of the data unit in the first data unit set other than the first data unit.

As an embodiment, the above method is applicable to the scenarios where the data unit in the first data unit set is out of order upon reaching the first node.

According to one aspect of the present application, comprises:
the first operation set includes discarding a fourth data unit set by the first protocol entity;
wherein the fourth data unit set includes data units in the first data unit set that are not submitted to the second protocol entity.

As an embodiment, the above methods can reduce the transmission of useless data units and increase the system capacity.

The present application discloses a first node for wireless communication, wherein it comprises:
a first transceiver receiving a first data unit set in a first protocol entity; starting a first timer as a response to receive a first data unit; executing a first operation set as a response to the first timer expiration, the first operation set sending a first indication to a second protocol entity, the first indication is used to indicate discarding a second data unit set;
wherein the first data unit is one data unit in the first data unit set; at least part of the data unit in the first data unit set is used to generate the second data unit set; the first protocol entity is configured to non-signaling radio bearer; the protocol layer in which the first protocol entity is located is above the protocol layer in which the second protocol entity is located; and the first protocol entity is a protocol entity in the layer above MAC.

According to one aspect of the present application, comprises:
a first identity is used to indicate the first data unit set;
wherein the first identity is used to indicate that the first data unit set comprises: Each data unit in the first data unit set includes the first identity.

According to one aspect of the present application, comprises:
at least a first information set is used to indicate the first data unit set;
wherein the first information set includes at least two of the following three: a start identity, an end identity, and a total number of data units.

According to one aspect of the present application, comprises:
the first transceiver discarding a third data unit set at the second protocol entity;
wherein the third data unit set is a subset of the second data unit set, any data unit in the third data unit set or a segment of the data unit has not been submitted to a lower layer than the protocol layer where the second protocol entity is located.

According to one aspect of the present application, comprises:
The time of receipt of the first data unit is no later than the time of receipt of other data units in the first data unit set other than the first data unit.

According to one aspect of the present application, comprises:
Each data unit in the first data unit set includes a second identity, the value of the second identity of the first data unit is not greater than the value of the second identity of the data unit in the first data unit set other than the first data unit.

According to one aspect of the present application, comprises:
the first operation set includes discarding a fourth data unit set by the first protocol entity;
wherein the fourth data unit set includes data units in the first data unit set that are not submitted to the second protocol entity.

### Description of Drawings

Other features, objects, and advantages of the present application will become more apparent by reading the detailed description of the non-limiting embodiments with reference to the following drawings:
FIG. 1 illustrates a transmission flow diagram of a first node according to one embodiment of the present application;
FIG. 2 illustrates a schematic diagram of a network architecture according to one embodiment of the present application;
FIG. 3 illustrates a schematic diagram of a radio protocol architecture for an user plane and a control plane according to one embodiment of the present application;
FIG. 4 illustrates a schematic diagram of a hardware module of a communication device according to one embodiment of the present application;
FIG. 5 illustrates a signal transmission flow diagram according to one embodiment of the present application;
FIG. 6 illustrates a format schematic diagram of one data unit in a first data unit set according to one embodiment of the present application;
FIG. 7 illustrates a relationship schematic diagram between at least a first information set and a first data unit set according to one embodiment of the present application;
FIG. 8 illustrates a schematic diagram of a first data unit and a first data unit set according to one embodiment of the present application;
FIG. 9 illustrates a processing flow diagram in a first protocol entity according to one embodiment of the present application;
FIG. 10 illustrates a processing flow diagram in a second protocol entity according to one embodiment of the present application;
FIG. 11 illustrates a structural block diagram of a processing apparatus in a first node according to one embodiment of the present application.

### Specific Embodiments

The technical solution of the present application will be described in further detail below in conjunction with the accompanying drawings, and it is to be noted that, in the absence of conflicts, the embodiments of the present application and the features in the embodiments may be arbitrarily combined with each other.

### Embodiment 1

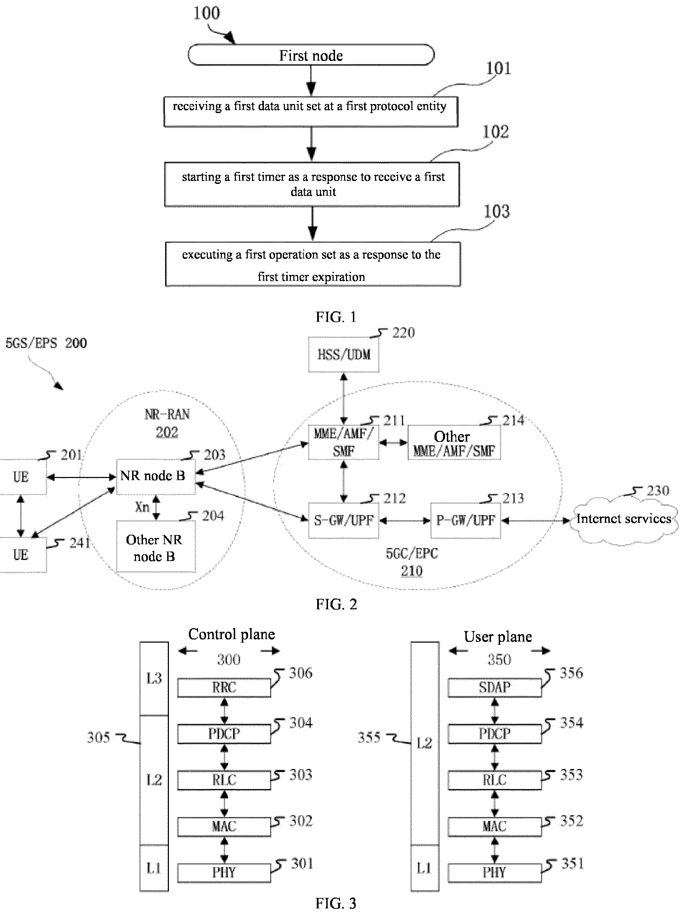

Embodiment 1 exemplifies a transmission flow diagram of according to one embodiment of the present application, as shown in FIG. 1.

In Embodiment 1, the first node 100 receiving a first data unit set at a first protocol entity at step 101; starting a first timer as a response to receive a first data unit at step 102; executing a first operation set as a response to the first timer expiration at step 103, the first operation set sending a first indication to a second protocol entity, the first indication is used to indicate discarding a second data unit set; wherein the first data unit is one data unit in the first data unit set; at least part of the data unit in the first data unit set is used to generate the second data unit set; the first protocol entity is configured to non-signaling radio bearer; the protocol layer in which the first protocol entity is located is above the protocol layer in which the second protocol entity is located; and the first protocol entity is a protocol entity in the layer above MAC.

As an embodiment, receiving a first data unit set at a first protocol entity.

As an embodiment, the first data unit set is received from an upper layer of the protocol layer at which the first protocol entity is located.

As an embodiment, the first protocol entity is a protocol entity in the layer above Medium Access Control (MAC).

As an embodiment, the first protocol entity is located at a protocol layer above the MAC.

As an embodiment, the first protocol entity is located at a first protocol layer.

As an embodiment, the first protocol entity is a Service Data Adaptation Protocol (SDAP) entity and the first protocol layer is a SDAP sublayer.

As an embodiment, the first protocol entity is a Sidelink Relay Adaption Protocol (SRAP) entity, and the first protocol layer is a SRAP sublayer.

As an embodiment, the first protocol entity is a Packet Data Convergence Protocol (PDCP) entity and the first protocol layer is a PDCP sublayer.

As an embodiment, the first protocol entity is a Radio Link Control (RLC) entity and the first protocol layer is an RLC sublayer.

As an embodiment, the data units in the first data unit set belong to the same Protocol Data Unit (PDU) set.

As an embodiment, the data units in the first data unit set belong to the same application layer data packet.

As an embodiment, the data units in the first data unit set belong to the same information unit.

As an embodiment, the data units in the first data unit set are interrelated with each other.

As an embodiment, the data units in the first data unit set are atomized at the application layer.

As an embodiment, the data units in the first data unit set are indivisible at the application layer.

As an embodiment, the data units in the first data unit set have a dependency at the application layer.

As a sub-embodiment of the above embodiment, when any of the data cells in the first data unit set are lost, the remaining data cells in the first data unit set are useless.

As a sub-embodiment of the above embodiment, when a data unit in the first data unit set is lost, the remaining data units following the lost data unit in the first data unit set become useless. Specifically, when the first data unit in the first data unit set is lost, the remaining data units in the first data unit set become useless; when the last data unit in the first data unit set is lost, the remaining data units in the first data unit set remain useful; wherein, the first data unit in the first data unit set refers to the earliest data unit in the first data unit set, or the first data unit in the first data unit set is the data unit with the smallest sequence number in the first data unit set.

As an embodiment, the first data unit set includes at least one data unit.

As an embodiment, the first data unit set includes at least two data units.

As an embodiment, the first protocol entity is an Acknowledged Mode (AM) protocol entity.

As a sub-embodiment of the above embodiment, the first protocol entity consists of a transmitting side and a receiving side.

As an embodiment, the first protocol entity is an Unrecognized Mode (UM) protocol entity.

As a sub-embodiment of the above embodiment, the first protocol entity is a sending protocol entity.

As an embodiment, the second protocol entity is an AM protocol entity.

As a sub-embodiment of the above embodiment, the second protocol entity consists of a transmitting side and a receiving side.

As an embodiment, the second protocol entity is an UM protocol entity.

As a sub-embodiment of the above embodiment, the second protocol entity is a sending protocol entity.

As an embodiment, the first protocol entity is configured to a non-signaling radio carrier.

As an embodiment, the first protocol entity is configured to a non-signaling radio carrier comprises: The first protocol entity services the non-signaling radio carrier.

As an embodiment, the first protocol entity is configured to a non-signaling radio carrier comprises: The data carried wirelessly by the non-signaling is submitted to the first protocol entity for transmission.

As an embodiment, the non-signaling radio carrier is a radio carrier other than Signaling Radio Bearer (SRB).

As an embodiment, the non-signaling radio carrier is a Data Radio Bearer (DRB).

As an embodiment, the non-signaling radio bearer is a MBS radio bearer (MRB).

As an embodiment, the first timer is started as a response to receiving the first data unit.

As an embodiment, the first data unit is one data unit in the first data unit set.

As an embodiment, the first data unit is the first data unit of the first data unit set received at the first protocol entity.

As an embodiment, the first data unit is the Qth data unit received in the first data unit set in the first protocol entity; wherein the value of the Q is not greater than the total value of the data unit included in the first data unit set and is not less than 1.

As a sub-embodiment of the above two embodiments, the data units included in the first data unit set are received in chronological order.

As an embodiment, the first timer is maintained at the first protocol layer.

As an embodiment, the first timer is maintained at the first protocol entity.

As an embodiment, the first timer is associated with the first data unit.

As a sub-embodiment of the above embodiment, when an indication is received from the upper layer to discard the first data unit, the first data unit is discarded and the first timer is stopped.

As a sub-embodiment of the above embodiment, when the first data unit is successfully transmitted, the first timer is stopped.

As a sub-embodiment of the above embodiment, when the first timer expires, the first data unit is discarded.

As an embodiment, the first timer is a discardTimer (discard timer).

As an embodiment, the expiration value of the first timer is configured by a network.

As an embodiment, the expiration value of the first timer is indicated by an upper-layer protocol entity of the first protocol entity.

As an embodiment, the upper layer includes an application layer.

As an embodiment, the upper layer includes a Non-access stratum (NAS) layer.

As an embodiment, the upper layer includes a Radio Resource Control (RRC) layer.

As an embodiment, the expiration value of the first timer is determined by the first protocol entity itself.

As an embodiment, the expiration value of the first timer is a PDB of the first data unit.

As an embodiment, the expiration value of the first timer is a maximum transmission delay for the first data unit to transmit through the first protocol entity.

As an embodiment, the first timer is in a running state after it begins.

As an embodiment, when the first timer is in the running state, the first timer is updated in the next interval of time and the first timer is then judged to be expired.

As an embodiment, the one time interval comprises 1 millisecond.

As an embodiment, the one time interval includes a time length of 1 slot.

As an embodiment, the one time interval includes a time length of 1 subframe.

As an embodiment, starting the first timer sets the value of the first timer to 0, the phrase updating the first timer comprises: adding a value of the first timer to 1; when a value of the first timer is the expiration value of the first timer, determining that the first timer expires.

As an embodiment, starting the first timer sets the value of the first timer to the expiration value of the first timer, the phrase updating the first timer comprises: subtracting a value of the first timer by 1; when the value of the first timer is 0, determining that the first timer expires.

As an embodiment, executing a first operation set as a response to the first timer expiration, the first operation set sending a first indication to a second protocol entity.

As an embodiment, when the first timer expires, executing a first operation set, and the first operation set sending a first indication to a second protocol entity.

As an embodiment, the first indication is an interlayer indication between the protocol layers.

As an embodiment, the first indication includes a protocol serial number set, and the protocol serial number set is used to indicate the second data unit set.

As an embodiment, the protocol serial number set includes at least one protocol serial number, and the protocol serial number is a non-negative integer.

As an embodiment, each protocol serial number in the protocol serial number set is assigned by the first protocol entity.

As an embodiment, the first protocol entity assigns the protocol serial number according to the order in which each data unit in the first data unit set is received.

As an embodiment, the second data unit set includes at least one data unit.

As an embodiment, the protocol layer in which the first protocol entity is located is above the protocol layer in which the second protocol entity is located.

As an embodiment, the radio carrier serviced by the second protocol entity is the same as the radio carrier configured for the first protocol entity.

As an embodiment, the first protocol entity and the second protocol entity are associated with the same radio bearer.

As an embodiment, the first protocol entity and the second protocol entity are associated with the same Quality of Service (QoS) flow.

As an embodiment, the first protocol entity and the second protocol entity are associated with the same session.

As an embodiment, the first protocol entity is associated with at least two underlying protocol entities, the second protocol entity being any of the at least two underlying protocol entities; wherein the first protocol entity is configured as a duplication.

As an embodiment, the first protocol entity is associated with at least two lower protocol entities, the second protocol entity being one of the at least two lower protocol entities; wherein the non-signaling radio bearer configured for the first protocol entity is a split bearer.

As an embodiment, the first protocol entity is a SDAP entity and the second protocol entity is a protocol entity at a layer below the SDAP sublayer.

As a sub-embodiment of the above embodiment, the second protocol entity is a PDCP entity.

As a sub-embodiment of the above embodiment, the second protocol entity is an RLC entity.

As a sub-embodiment of the above embodiment, the second protocol entity is a MAC entity.

As an embodiment, the first protocol entity is a SRAP entity and the second protocol entity is a protocol entity at a layer below the SRAP sublayer.

As a sub-embodiment of the above embodiment, the second protocol entity is an RLC entity.

As a sub-embodiment of the above embodiment, the second protocol entity is a MAC entity.

As an embodiment, the first protocol entity is a PDCP entity and the second protocol entity is a protocol entity at a layer below the PDCP entity.

As a sub-embodiment of the above embodiment, the second protocol entity is an RLC entity.

As a sub-embodiment of the above embodiment, the second protocol entity is a MAC entity.

As an embodiment, the first protocol entity is an RLC entity and the second protocol entity is a protocol entity at a layer below the RLC entity.

As a sub-embodiment of the above embodiment, the second protocol entity is a MAC entity.

Typically, the first protocol entity is a PDCP entity and the second protocol entity is an RLC entity.

As an embodiment, a portion of a data unit in the first data unit set is used to generate the second data unit set.

As an embodiment, a data unit in the first data unit set other than the first data unit is used to generate the second data unit set.

As an embodiment, all of the data units in the first data unit set are used to generate the second data unit set.

As an embodiment, the data unit in the first data unit set is a Service Data Unit (SDU), and the data unit in the second data unit set is a Protocol Data Unit (PDU).

As a sub-embodiment of the above embodiment, when the first protocol entity is a SDAP entity, the data unit in the first data unit set is a SDAP SDU, and the data unit in the second data unit set is a SDAP PDU.

As a sub-embodiment of the above embodiment, when the first protocol entity is a SRAP entity, the data unit in the first data unit set is a SRAP SDU and the data unit in the second data unit set is a SRAP PDU.

As a sub-embodiment of the above embodiment, when the first protocol entity is a PDCP entity, the data unit in the first data unit set is a PDCP SDU and the data unit in the second data unit set is a PDCP PDU.

As a sub-embodiment of the above embodiment, when the first protocol entity is an RLC entity, the data unit in the first data unit set is RLC SDU, and the data unit in the second data unit set is an RLC PDU.

As an embodiment, any of the data units in the second data unit set are generated after the first protocol entity is processed by one of the data units in the first data unit set.

As an embodiment, the processing includes Integrity protection and verification.

As an embodiment, the processing includes ciphering.

As an embodiment, the processing includes a RObust Header Compression (ROHC).

As an embodiment, the processing includes adding a protocol head.

As an embodiment, the protocol head includes a protocol serial number.

### Embodiment 2

Embodiment 2 illustrates a schematic diagram of a network architecture according to one embodiment of the present application, as shown in FIG. 2. FIG. 2 illustrates a network architecture 200 of Long-Term Evolution (LTE), Long-Term Evolution Advanced (LTE-A) and future 5G system. The NR 5G, LTE or LTE-A network architecture 200 may be referred to as 5G System (5GS)/Evolved Packet System (EPS) 200 or some other suitable term. The 5GS/EPS 200 may include one or more User Equipment (UE) 201, a Next Generation Radio Access Network (NG-RAN) 202, a 5G CoreNetwork (5GC)/Evolved Packet Core (EPC) 210, a Home Subscriber Server (HSS)/Unified Data Management (UDM) 220, and an Internet service 230. The 5GS/EPS may be interconnected with other access networks, but these entities/interfaces are not shown for simplicity. As shown in the figure, the 5GS/EPS provides packet exchange services. However, it will be readily understood by those ordinary skill in the art that various concepts presented throughout the present application may be extended to a network or other cellular networks that provide circuit exchange services. NG-RAN comprises NR node B (gNB) 203 and other gNB204. The gNB 203 provides user and control plane protocol termination towards the UE 201. The gNB 203 may be connected to the other gNB 204 via an Xn interface (e.g., backhaul). The XnAP protocol of the Xn interface is used to transmit a control-surface message of the wireless network and the user-surface protocol of the Xn interface is used to transmit user-surface data. gNB203 may also be referred to as a base station, a base transceiver station, a radio base station, a radio transceiver, a transceiver function, a basic service set (BSS), an extended service set (ESS), a Transmission Reception Point (TRP) node, or some other suitable term, and gNB203 may be a satellite base station in the Non Terrestrial Network (NTN) network, or relayed by satellites. The gNB 203 provides access points to the 5GC/EPC 210 for the UE 201. Embodiments of the UE 201 include cellular phones, smart phones, session initiation protocol (SIP) phones, laptop computers, personal digital assistants (PDA), satellite radios, global positioning systems, multimedia devices, video devices, digital audio players (e.g., MP3 players), cameras, game consoles, drones, aircraft, narrow band IoTs, machine type communication devices, land vehicles, automobiles, in-vehicle equipment, in-vehicle communication units, wearable devices, or any other similar function apparatuses. Those of ordinary skill in the art may also refer to the UE 201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handheld, a user agent, a mobile client, a client, or some other suitable term. The gNB 203 is connected to the 5GC/EPC 210 via an S1/NG interface. The 5GC/EPC 210 includes an MME (Mobility Management Entity)/AMF (Authentication Management Field)/SMF (Session Management Function) 211, another MME/AMF/SMF214, an S-GW (Service Gateway)/UPF (User Plane Function) 212 and a P-GW (Packet Data Network Gateway)/UPF 213. The MME/AMF/SMF 211 is a control node that processes signaling between the UE 201 and the 5GC/EPC 210. Generally, the MME/AMF/SmF 211 provides carrier and connection management. All user Internet Protocol (IP) packets are transmitted via the S-GW/UPF 212, which is itself connected to the P-GW/UPF 213. The P-GW provides UE IP address assignment along with other functions. The P-GW/UPF 213 is connected to the Internet service 230. The Internet service 230 includes an operator's corresponding Internet protocol service, which may include, inter alia, the Internet, an intranet, an IP Multimedia Subsystem (IMS) and a Packet switching (PS) streaming service.

As an embodiment, the UE201 corresponds to a first node in the present application.

As an embodiment, the gNB203 corresponds to a first node in the present application.

As an embodiment, the UE201 is a user equipment.

As an embodiment, the UE201 is a relay device.

As an embodiment, the UE201 is a RoadSide Unit (RSU).

As an embodiment, the gNB203 is a Marco Cell base station.

As an embodiment, the gNB203 is a Micro Cell base station.

As an embodiment, the gNB203 is a Pico Cell base station.

As an embodiment, the gNB203 is a Femtocell base station.

As an embodiment, the gNB203 is a base station device that supports large latency differences.

As an embodiment, the gNB203 is a flight platform device.

As an embodiment, the gNB203 is a satellite device.

As an embodiment, the gNB203 is a base station device that supports large latency differences.

As an embodiment, the gNB203 is a test device (e.g., a transceiver that simulates some functions of a base station, a signaling tester).

As an embodiment, the wireless link from the UE201 to the gNB203 is an uplink, and the uplink is used to perform uplink transmission.

As an embodiment, the wireless link from the gNB203 to the UE201 is a downlink, and the downlink is used to perform a downlink transmission.

As an embodiment, the wireless link between UE201 and UE241 is a sidelink, and the sidelink is used to perform sidelink transmission.

As an embodiment, the UE201 and the gNB203 are connected through a Uu air interface.

As an embodiment, the UE241 and the gNB203 are connected through a Uu air interface.

As an embodiment, the UE201 and the UE241 are connected through a PC5 air interface.

### Embodiment 3

Embodiment 3 exemplifies a schematic diagram of a radio protocol architecture for an user plane and a control plane according to one embodiment of the present application, as shown in FIG. 3. FIG. 3 is a schematic diagram illustrating an embodiment of a radio protocol architecture for the user plane 350 and the control plane 300, and FIG. 3 shows, with three layers, a radio protocol architecture for the control plane 300 of the UE and gNB: layers 1, 2 and 3. The layer 1 (L1 layer) is the lowest layer and implements various PHY (physical layer) signal processing functions. The L1 layer will be referred to herein as PHY 301. The layer 2 (L2 layer) 305 is over PHY301 and is responsible for the link between UE and gNB through PHY301. The L2 layer 305 includes a Medium Access Control (MAC) sublayer 302, a Radio Link Control (RLC) sublayer 303, and a Packet Data Convergence Protocol (PDCP) sublayer 304, and these sublayers terminate at the gNB side of the network side. The PDCP sublayer 304 provides data encryption and integrity protection, and the PDCP sublayer 304 also provides inter-cell movement support for UE between gNBs. The RLC sublayer 303 provides segmentation and recombination of the data packet, and realizes the retransmission of the missing data packet by Automatic Repeat Request (ARQ). The RLC sublayer 303 also provides repeated data packet detection and protocol error detection. The MAC sublayer 302 provides a mapping between the logical channel and the transmission channel and a reuse of the logical channel. The MAC sublayer 302 is also responsible for assigning various radio resources (e.g., resource blocks) in one cell. The MAC sublayer 302 is also responsible for Hybrid Automatic Repeat Request (HARQ) operation. The Radio Resource Control (RRC) sublayer 306 in Layer 3 (L3) in the control plane 300 is responsible for obtaining radio resources (i.e., radio bearers) and uses the RRC signaling between the gNB and the UE to configure the lower layers. The radio protocol architecture of the user plane 350 comprises Layer 1 (L1) and Layer 2 (L2), the radio protocol architecture of the user plane 350 is generally identical to the corresponding layer and sublayer in the control plane 300 in terms of a physical layer 351, a PDCP sublayer 354 in L2 355, a RLC sublayer 353 in L2 355, and a MAC sublayer 352 in L2 355, but the PDCP sublayer 354 also provides header compression for upper layer data packets to reduce radio transmission overhead. The L2 layer 355 in the user plane 350 also includes an SDAP (Service Data Adaption Protocol) sublayer 356 that is responsible for mapping between QoS streams and data radio bearer (DRB) to support diversity of the business. The radio protocol architecture of the UE in the user plane 350 may include at the L2 layer a portion or all of the protocol sublayers of the SDAP sublayer 356, the PDCP sublayer 354, the RLC sublayer 353, and the MAC sublayer 352. Although not shown, the UE may have several upper layers over the L2 layer 355, including a network layer (e.g., an IP layer) that terminates at the P-GW on the network side and an application layer that terminates at the other end of the connection (e.g., a far-end UE, a server, etc.).

As an embodiment, the first transceiver is used for interlayer communication.

As an embodiment, the first transceiver is used for data and signaling transmission from the lower layer to the upper layer.

As an embodiment, the first transceiver is used to transmit data and signaling from the upper layer to the lower layer.

As an embodiment, the first transceiver is used by the PDCP304 to transmit to the RLC303.

As an embodiment, the first transceiver is used by the PDCP304 to receive from the RLC303.

As an embodiment, the first transceiver is used by the PDCP354 to transmit to the RLC353.

As an embodiment, the first transceiver is used by the PDCP354 to receive from the RLC353.

As an embodiment, the first transceiver is used by the RLC303 to transmit to the PDCP304.

As an embodiment, the first transceiver is used by the RLC303 to receive from the PDCP304.

As an embodiment, the first transceiver is used by the RLC353 to transmit to the PDCP354.

As an embodiment, the first transceiver is used by the RLC353 to receive from the PDCP354.

The interlayer interaction between other interlayer communications and the above PDCP and RLC will not be repeated.

As an embodiment, the first transceiver includes interlayer transceiver primitives.

As an embodiment, the first transceiver includes a set of instructions for completing the transceiver function.

As an embodiment, the entities of a plurality of sublayers of the control plane in FIG. 3 constitute the SRB in a vertical direction.

As an embodiment, the entities of a plurality of sublayers of the user plane in FIG. 3 form the DRB in a vertical direction.

As an embodiment, the entities of a plurality of sublayers of the user plane in FIG. 3 constitute the MRB in a vertical direction.

As an embodiment, the radio protocol architecture in FIG. 3 applies to the first node in the present application.

As an embodiment, the first data unit set in the present application is generated at the SDAP356.

As an embodiment, the first data unit set in the present application is generated at the PDCP354.

As an embodiment, the first data unit set in the present application is generated at the RLC353.

As an embodiment, the second data unit set in the present application is generated at the SDAP356.

As an embodiment, the second data unit set in the present application is generated at the PDCP354.

As an embodiment, the second data unit set in the present application is generated at the RLC353.

As an embodiment, the first data unit set in the present application is generated at the SDAP356, and the second data unit set in the present application is generated at the PDCP354.

As an embodiment, at one protocol layer, the data unit received from the upper layer is SDU, and the data unit processed by the protocol layer is PDU, and the PDU is submitted to the lower layer.

As an embodiment, at one protocol layer, the data unit received from the lower layer is PDU, and the data unit processed by the protocol layer is SDU, and the SDU is submitted to the upper layer.

As an embodiment, taking the PDCP sublayer as an example, on the transmitting side, the PDCP sublayer receives a PDCP SDU from the SDAP sublayer, processes by the PDCP sublayer to generate a PDCP PDU, and then submit it to the RLC sublayer.

As an embodiment, taking the data transmission on the PDCP sublayer and RLC sublayer interfaces as an example, the PDU generated at the PDCP is referred to as PDCP PDU at the PDCP sublayer, and the RLC sublayer is referred to as RLC SDU, i.e., the PDCP sublayer passes PDCP PDU to the RLC sublayer, and the RLC sublayer receives the RLC SDU from the PDCP sublayer.

As an embodiment, the SDAP PDU and the PDCP SDU can be interchanged, the PDCP PDU and the RLC SDU can be interchanged, and the RLC PDU and the MAC SDU can be interchanged.

As an embodiment, the L2 layer 305 or 355 belongs to a higher layer.

As an embodiment, the RRC sublayer 306 in the L3 layer is a higher layer.

### Embodiment 4

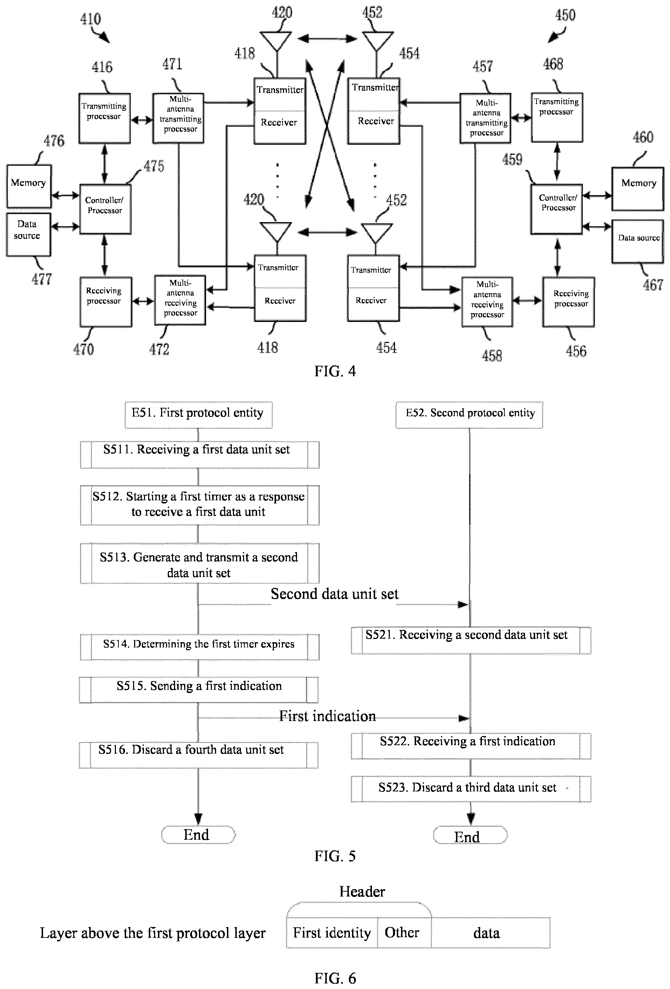

Embodiment 4 exemplifies a schematic diagram of a hardware module of a communication device according to one embodiment of the present application, as shown in FIG. 4. FIG. 4 is a block diagram of a first communication device 450 and a second communication device 410 in communication with each other over an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

The second communication device 410 comprises a controller/processor 475, a memory 476, a data source 477, a receiving processor 470, a transmitting processor 416, a multi-antenna receiving processor 472, a multi-antenna transmitting processor 471, a transmitter/receiver 418, and an antenna 420.

In the transmission from the second communication device 410 to the first communication device 450, at the second communication device 410, the upper data packet from the core network or the upper data packet from the data source 477 is provided to the controller/processor 475. The core network and data source 477 represents all protocol layers above the L2 layer. The controller/processor 475 implements the functionality of the L2 layer. In transmission from the second communication device 410 to the first communication device 450, the controller/processor 475 provides header compression, encryption, packet segmentation and reordering, multiplexing between logic and the transport channel, and radio resource distribution to the first communication device 450 based on various priority measures. The controller/processor 475 is also responsible for the retransmission of the lost package and the signaling to the first communication device 450. The transmitting processor 416 and the multi-antenna transmitting processor 471 implement various signal processing functions for the L1 layer (i.e., the physical layer). The transmitting processor 416 implements coding and interleaving to facilitate forward error correction (FEC) at the second communication equipment 410, and mapping of signal clusters based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 pre-codes encoded and modulated symbols in digital space, including codebook-based pre-coding and non-codebook-based pre-coding, and beam-based processing, generating one or more spatial streams. The transmitting processor 416 then maps each spatial stream to a sub-carrier, multiplexing with a reference signal (e.g., a frequency director) in the time and/or frequency domain, and then used an Inverse Fast Fourier Transform (IFFT) to generate a physical channel of the time domain multi-wave symbol stream on the carrier. The multi-antenna transmitting processor 471 then sends the simulated pre-coding/beam-forming operation for the time domain multi-carrier symbol flow. Each transmitter 418 converts the baseband multi-carrier symbol flow provided by the multi-antenna transmitting processor 471 into a radio frequency flow, which is then provided to a different antenna 420.

In transmission from the second communication device 410 to the first communication device 450, at the first communication device 450, each receiver 454 receives a signal through its respective antenna 452. Each receiver 454 resumes information modulated onto a radio frequency carrier and converts the radio frequency flow into a baseband multi-carrier symbol flow to the receiving processor 456. The receiving processor 456 and the multi-antenna receiving processor 458 implement various signal processing functions of the L1 layer. The multi-antenna receiving processor 458 receives the simulated pre-coding/beam-forming operation for the baseband multi-carrier symbol flow from the receiver 454. The receiving processor 456 uses fast Fourier transform (FFT) to convert the baseband multi-carrier symbol stream from the time domain to the frequency domain after receiving the analog pre-coding/beamforming operation. In the frequency domain, the physical layer data signal and the reference signal are demultiplexed by the receiving processor 456, wherein the reference signal is used for channel estimation and the data signal recovers any spatial stream destined for the first communication equipment 450 after multi-antenna detection by the multi-antenna receiving processor 458. The symbols on each spatial stream are demodulated and recovered in the receiving processor 456 and generate a soft decision. The receiving processor 456 then decodes and de-interleaves the soft decision to recover upper layer data and control signals transmitted by the second communication equipment 410 over the physical channel. The upper layer data and control signal are then provided to the controller/processor 459. The controller/processor 459 implements the functions of the L2 layer. The controller/processor 459 may be associated with the memory 460 that stores program code and data. The memory 460 may be referred to as a computer-readable medium. In the transmission from the second communication equipment 410 to the first communication equipment 450, the controller/processor 459 provides multiplexing between transport and logical channels, packet reassembly, decryption, header decompression, and control signal processing to recover the upper layer data packet from the second communication equipment 410. The upper layer data packet is then provided to all protocol layers above the L2 layer. Various control signals may also be provided to L3 for L3 processing.

In the transmission from the first communication device 450 to the second communication device 410, at the first communication device 450, the data source 467 is used to provide the upper data packet to the controller/processor 459. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logic and transport channels based on wireless resource allocation, implementing L2 layer functions for the user plane and control plane. The controller/processor 459 is also responsible for the retransmission of the lost package and the signaling to the second communication device 410. The transmitting processor 468 performs modulation mapping and channel coding processing, the multi-antenna transmitting processor 457 carries out digital multi-antenna spatial pre-coding, including codebook-based precoding and non-codebook-based pre-coding, and beamforming processing, and then the transmitting processor 468 modulates the generated spatial stream to a multi-carrier/single-carrier symbol stream, which is then sent to a different antenna 452 via the transmitter 454 after the analog pre-coding/beamforming operation by the multi-antenna transmitting processor 457. Each transmitter 454 first converts the baseband symbol flow provided by the multi-antenna transmitting processor 457 into a radio frequency symbol flow, which is then provided to the antenna 452.

In the transmission from the first communication device 450 to the second communication device 410, the second communication device 410 performs functions similar to those of the receiving function at the first communication device 450, as described in the transmission from the second communication device 410 to the first communication device 450. Each receiver 418 receives a radio frequency signal through its respective antenna 420, converts the received radio frequency signal into a baseband signal, and provides the baseband signal to the multi-antenna receiving processor 472 and the receiving processor 470. The receiving processor 470 and the multi-antenna receiving processor 472 collectively implement the functions of the L1 layer. The controller/processor 475 implements the function of the L2 layer. The controller/processor 475 may be associated with the memory 476 that store program code and data. The memory 476 may be referred to as a computer-readable medium. In the transmission from the first communication device 450 to the second communication device 410, the controller/processor 475 provides multiplexing between the transport and logical channel, packet reassembly, decryption, header decompression, control signal processing to recover the upper data packet from the first communication device 450. The upper data packet from the controller/processor 475 may be provided to all protocol layers over the core network or L2 layer, or various control signals may be provided to the core network or L3 for L3 processing.

As an embodiment, the first communication device 450 apparatus includes: at least one processor and at least one memory, and at least one memory comprising computer program code; at least one memory and computer program code being configured to be used together with at least one processor, the first communication device 450 apparatus at least: receiving a first data unit set at a first protocol entity; starting a first timer as a response to receive the first data unit; executing a first operation set as a response to the first timer expiration, the first operation set includes sending a first indication to a second protocol entity, the first indication is used to indicate discarding a second data unit set; wherein the first data unit is one data unit in the first data unit set; at least part of the data unit in the first data unit set is used to generate the second data unit set; the first protocol entity is configured to non-signaling radio bearer; the protocol layer in which the first protocol entity is located is above the protocol layer in which the second protocol entity is located; and the first protocol entity is a protocol entity in the layer above MAC.

As an embodiment, the first communication device 450 apparatus includes: a memory storing a computer-readable instruction program that, when executed by at least one processor, generates an action, the action comprising: receiving a first data unit set at a first protocol entity; starting a first timer as a response to receive the first data unit; executing a first operation set as a response to the first timer expiration, the first operation set includes sending a first indication to a second protocol entity, the first indication is used to indicate discarding a second data unit set; wherein the first data unit is one data unit in the first data unit set; at least part of the data unit in the first data unit set is used to generate the second data unit set; the first protocol entity is configured to non-signaling radio bearer; the protocol layer in which the first protocol entity is located is above the protocol layer in which the second protocol entity is located; and the first protocol entity is a protocol entity in the layer above MAC.

As an embodiment, the first communication device 450 corresponds to a first node in the present application.

As an embodiment, the first communication device 450 is a UE.

As an embodiment, the first communication device 450 is a base station.

As an embodiment, the first communication device 450 is a relay node.

As an embodiment, the first communication device 450 is a UE and the second communication device 410 is a base station.

As an embodiment, the first communication device 450 is a base station and the second communication device 410 is a UE.

As an embodiment, at least one of the antenna 452, the receiver 454, the multi-antenna receiving processor 458, the receiving processor 456 or the controller/processor 459 is used to receive a first data unit set in the present application.

As an embodiment, at least one of the antenna 452, the transmitter 454, the multi-antenna transmitting processor 457, the transmitting processor 468 or the controller/processor 459 is used to send a first indication in the present application.

### Embodiment 5

Embodiment 5 exemplifies a flow diagram of signal transmission according to one embodiment of the present application, as shown in FIG. 5. In FIG. 5, the first protocol entity and the second protocol entity E51, E52 are both located at a first node, the first protocol entity and the second protocol entity E51, E52 being in communication through an interlayer interface.

For the **first protocol entity E51,** receives a first data unit set in step S511; starts a first timer as a response to receive the first data unit in step S512; generates and sends a second data unit set in step S513; determines a first timer expiration in step S514; transmits first indication in step S515; and discards a fourth data unit set in step S516.

For the **second protocol entity E52,** receives the second data unit set in step S521, receives the first indication in step S522, and discards the third data unit set in step S523.

In Embodiment 5, receiving a first data unit set at a first protocol entity; starting a first timer as a response to receive the first data unit; executing a first operation set as a response to the first timer expiration, the first operation set includes sending a first indication to a second protocol entity, the first indication is used to indicate discarding a second data unit set; wherein the first data unit is one data unit in the first data unit set; at least part of the data unit in the first data unit set is used to generate the second data unit set; the first protocol entity is configured to non-signaling radio bearer; the protocol layer in which the first protocol entity is located is above the protocol layer in which the second protocol entity is located; and the first protocol entity is a protocol entity in the layer above MAC; discarding a third data unit set at the second protocol entity; wherein the third data unit set is a subset of the second data unit set, any data unit in the third data unit set or a segment of the data unit has not been submitted to a lower layer than the protocol layer where the second protocol entity is located; the first operation set includes discarding a fourth data unit set by the first protocol entity; wherein, the fourth data unit set includes data units in the first data unit set that are not submitted to the second protocol entity.

As an embodiment, the second data unit set is sent to the second protocol entity upon generation of the first protocol entity.

As an embodiment, a data unit in the first data unit set is sent to the second protocol entity after processing by the first protocol entity.

As an embodiment, the first transceiver receives a request from the second protocol entity; a data unit in the first data unit set processed by the first protocol entity is sent to the second protocol entity as a response to receiving the request.

As an embodiment, the first transceiver discards the second data unit set at the second protocol entity.

As an embodiment, the first transceiver discards the data unit in the second data unit set from the second protocol entity that was not successfully sent.

As an embodiment, at least one data unit in the second data unit set is not successfully received by a peer protocol entity of the second protocol entity.

As an embodiment, a peer protocol entity of a protocol entity and the one protocol entity are located at both ends of communication.

As an embodiment, the ends of the communication are connected via an air interface.

As an embodiment, the air interface is an Uu.

As an embodiment, the air interface is a PC5.

As an embodiment, the ends of the communication are connected via a wired link.

As an embodiment, the first transceiver discards a third data unit set at the second protocol entity; wherein the third data unit set is a subset of the second data unit set.

As an embodiment, the third data unit set includes at least one data unit.

As an embodiment, any data unit in the third data unit set or a segment of the data unit has not been submitted to a lower layer than the protocol layer where the second protocol entity is located.

As an embodiment, the segment of a data unit includes at least 1 bit of the data unit.

As an embodiment, the segment of a data unit includes at least 1 byte of the data unit.

As an embodiment, the first transceiver discards the data unit when any of the data units or segments of the data unit in the second data unit set has been submitted to a lower layer than the protocol layer where the second protocol entity is located.

As an embodiment, where the first protocol entity is a PDCP entity and the second protocol entity is an RLC entity, the second data unit set includes four RLC SDUs (or PDCP PDUs) with protocol serial numbers of 1, 2, 3, 4, and where a segment of RLC SDUs with protocol serial numbers of 1 and 2 is submitted to the MAC entity for transmission, the third data unit set includes two RLC SDUs with protocol serial numbers 3 and 4.

As an embodiment, the first operation set includes discarding a fourth data unit set by the first protocol entity; wherein the fourth data unit set includes data units in the first data unit set that are not submitted to the second protocol entity.

As an embodiment, the first operation set includes discards the first data unit at the first protocol entity.

As an embodiment, the first operation set includes discards the fourth data unit set at the first protocol entity.

As an embodiment, the time of receipt of any of the data units in the fourth data unit set is later than the data unit of the first data unit.

As an embodiment, starts a timer associated with the data unit as a response to receive a data unit, and the data unit belongs to the first data unit set.

As an embodiment, when the first timer expires, the timer associated with the data unit received after the first data unit has not expired; wherein the expiration value of the timer associated with each data unit in the first data unit set is the same.

As an embodiment, the value of the second identity of any of the data units in the fourth data unit set is not less than the data unit of the value of the second identity included in the first data unit.

As an embodiment, the fourth data unit set includes a data unit in the first data unit set having a value of the second identity that is greater than a value of the second identity included in the first data unit.

As an embodiment, the second identity is used to identify a location of a data unit in the first data unit set.

### Embodiment 6

Embodiment 6 exemplifies a schematic format of one data unit in a first data unit set according to one embodiment of the present application, as shown in FIG. 6.

As an embodiment, the first identity is used to indicate the first data unit set.

As an embodiment, each data unit in the first data unit set includes the first identity.

As an embodiment, the first identity is generated by a layer above the first protocol layer.

As an embodiment, the first identity is included in the header of a layer above the first protocol layer.

As an embodiment, the first identity is included in the application layer information.

As an embodiment, the first identity is a higher-layer identity.

As an embodiment, the first identity is one of the identities in the application layer header.

As an embodiment, the first identity is an application layer serial number.

As an embodiment, the first identity is one of the identities in the GPRS Tunneling Protocol (GTP)) header.

As an embodiment, the first identity is one of the identities in the Real-time Transport Protocol RTP header.

As an embodiment, the first identity is one of the identities in the IP header.

As an embodiment, the first identity is one of the identities in the Transmission Control Protocol (TCP) header.

As an embodiment, the first identity is one of the identities in the User Datagram Protocol (UDP) header.

As an embodiment, the first identity is one of the identities in the user plane (GTP-U) header.

As an embodiment, the first identity is a time stamp.

As an embodiment, the first identity is a content stamp.

As an embodiment, the first identity is a serial number (SN).

As an embodiment, the first identity is a video frame number.

As an embodiment, a video frame number is used to indicate a frame in a video stream, the first data unit set comprising at least part of the frame.

As an embodiment, the first identity includes a number of bits that is a multiple of 8.

As an embodiment, the first identity includes a number of bits that is a multiple of 10.

As an embodiment, the first protocol entity receives a data unit from the upper layer and resolves the data unit and determines whether the data unit belongs to the first data unit set according to whether the data unit carries the first identity.

Embodiment 6 exemplifies the case where the first identity is included in the header of the layer above the first protocol layer, which may also include other information fields, the data portion including user data.

It is to be noted that this embodiment does not exclude the case where the first identity is included in the application layer information.

### Embodiment 7

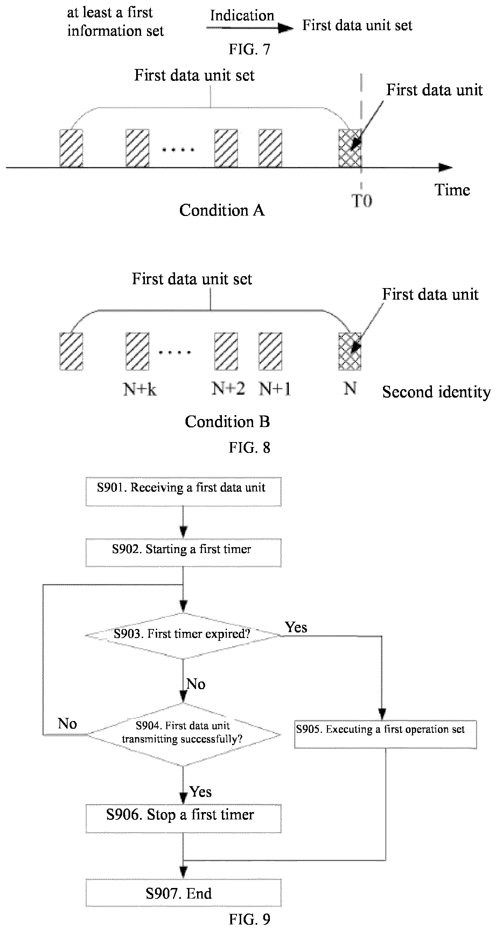

Embodiment 7 exemplifies a schematic diagram of the relationship between at least a first information set and the first data unit set according to one embodiment of the present application, as shown in FIG. 7.

As an embodiment, at least the first information set is used to indicate the first data unit set.

As an embodiment, the first transceiver receives a first information set at the first protocol entity, the first information set including at least two of the following three: a start identity, an end identity, and a total number of data units.

As an embodiment, the first information set is generated by a layer above the first protocol layer.

As an embodiment, the first information set is included in the header of a layer above the first protocol layer.

As an embodiment, the first information set is included in the application layer information.

As an embodiment, the first information set is included in a GTP protocol.

As an embodiment, the first information set includes a start identity and an end identity.

As an embodiment, the first information set includes a start identity and a total number of data units.

As an embodiment, the first information set includes an end identity and a total number of data units.

As an embodiment, the first information set is used to indicate the first data unit set.

As an embodiment, the first data unit set is determined according to the first information set.

As an embodiment, the first data unit set is determined according to the start identity and the end identity included in the first information set.

As a sub-embodiment of the above embodiment, the data unit received after the start identity is received and before the end identity is received belongs to the first data unit set.

As an embodiment, the first data unit set is determined according to the start identity included in the first information set and the total number of data units.

As a sub-embodiment of the above embodiment, the total number of data units received after the start identity is received belongs to the first data unit set.

As an embodiment, the first data unit set is determined according to the start identity included in the first information set and the total number of data units.

As a sub-embodiment of the above embodiment, the total number of data units received after the receipt of the end identity belongs to the first data unit set.

As an embodiment, the first data unit set is determined according to the first identity and the first information set.

As an embodiment, the first information set includes the start identity and the end identity to jointly determine the first data unit set according to the first identity.

As a sub-embodiment of the above embodiment, the data unit comprising the first identity received after the start identity and before the end identity is received belongs to the first data unit set.

As an embodiment, the first information set includes the start identity and the total number of data cells collectively determine the first data unit set according to the first identity.

As a sub-embodiment of the above embodiment, the total number of data units received after the start identity is received, including the first identity data unit, belongs to the first data unit set.

As an embodiment, the first information set includes the start identity and the total number of data cells collectively determine the first data unit set according to the first identity.

As a sub-embodiment of the above embodiment, the total number of data units received after the receipt of the end identity, including the data unit of the first identity, belongs to the first data unit set.

### Embodiment 8

Embodiment 8 exemplifies a schematic diagram of a first data unit and a first data unit set according to one embodiment of the present application, as shown in FIG. 8. In FIG. 8, the box filled with diagonal stripes represents a first data unit.

As an embodiment, the reception time of the first data unit is no later than the reception times of the other data units in the first data unit set other than the first data unit.

As an embodiment, a data unit in the first data unit set is received simultaneously over a time domain.

As an embodiment, the data unit in the first data unit set is overlapped in the time received on the time domain.

As an embodiment, the time of receipt of the first data unit is earlier than the time of receipt of other data units in the first data unit set other than the first data unit.

As an embodiment, a data unit in the first data unit set is received in sequence over a time domain.

As an embodiment, there is no overlap in the time received by the data units in the first data unit set on the time domain.

As an embodiment, a data unit in the first data unit set is sent before the first timer expires.

In Example A of FIG. 8, the time of receipt of the first data unit is earlier than the time of receipt of other data units in the first data unit set other than the first data unit, T0 being the latest allowed transmission time of any of the data units in the first data unit set.

As an embodiment, a data unit in the first data unit set that have not been sent before T0 will be discarded.

As an embodiment, the fourth data unit set includes data units in the first data unit set that are not submitted to the second protocol entity.

As an embodiment, the second data unit set includes data units in the first data unit set that have been submitted to the second protocol entity.

As an embodiment, the second data unit set includes data units in the first data unit set that have been submitted to the second protocol entity and received no earlier than the time of receipt of the first data unit.

As an embodiment, the third data unit set includes data units in the second data unit set that are not submitted to a layer below the protocol layer of the second protocol entity.

As an embodiment, when the first timer expires, the first indication includes a protocol serial number of all data units in the first data unit set that have been submitted to the second protocol entity.

As an embodiment, each data unit in the first data unit set includes a second identity, the value of the second identity of the first data unit is not greater than the value of the second identity of the data unit in the first data unit set other than the first data unit.

As an embodiment, each data unit in the first data unit set includes a second identity, the value of the second identity of the first data unit is less than the value of the second identity of the data unit in the first data unit set other than the first data unit.

As an embodiment, the second identity is a high-rise identity.

As an embodiment, the second identity is assigned at a layer above the first protocol layer.

As an embodiment, the second identity is used to indicate a generation time relationship for a data unit in the first data unit set.

As a sub-embodiment of the above embodiment, the value of the second identity of the data unit generated early in time is less than the value of the second identity of the data unit generated late in time.

As a sub-embodiment of the above embodiment, the value of the second identity of the data unit generated at the same time is the same, or it is determined by itself.

As an embodiment, the second identity is used to indicate a dependence between data cells in the first data unit set.

As a sub-embodiment of the above embodiment, the value of the second identity of the depended-upon data unit is less than the value of the second identity of the depending data unit.

As a sub-embodiment of the above embodiment, the value of a plurality of second identity of a plurality of data units depends on the same data unit is the same, or it is determined by itself.

As an embodiment, each data unit in the first data unit set includes different values for the second identity.

As an embodiment, the second identity is used to indicate one of PDU in a PDU set.

As an embodiment, the second identity is used to indicate one of data packet in a data packet set identified by a time stamp.

As an embodiment, the second identity is used to indicate one of data packet in a data packet set identified by a content stamp.

As an embodiment, the second identity is used to indicate one of data packet in a data packet set identified by a video frame number.

In Example B of FIG. 8, the second identity of the first data unit is N and the value of the second identity of the data unit in the first data unit set other than the first data unit is N+k, wherein the k is a positive integer.

As an embodiment, a data unit in the first data unit set with the value of the second identity no less than N will be discarded.

As an embodiment, the second data unit set includes the data unit that has been submitted to the second protocol entity in the first data unit set and the value of the second identity no less than the value of the second identity of the first data unit.

As an embodiment, when the first timer expires, the first indication includes a protocol serial number of all data units with the value of the second identity that has been submitted to the second protocol entity in the first data unit set no less than the value of the second identity of the first data unit.

### Embodiment 9

Embodiment 9 exemplifies a processing flow diagram in a first protocol entity according to one embodiment of the present application, as shown in FIG. 9.

In Embodiment 9, receives the first data unit in Step S901; start the first timer in Step S902; determines whether the first timer expire in Step S903; if it is expired, perform Step S905; if it is not expired, perform Step S904; determines if the first data unit is successfully transmitted in Step S904; if yes, perform Step S906, skip back to Step S903; perform a first operation set in Step S905; stop the first timer in Step S906.

As an embodiment, the second protocol entity sends a poll to a peer entity of the second protocol entity, the poll is used to trigger the peer entity feedback status PDU of the second protocol entity; the status PDU indicates whether one or a portion of the data unit in the second data unit set is successfully transmitted.

As an embodiment, a status PDU is received from the peer entity of the second protocol entity, when the status PDU indicates a positive acknowledgement for a data unit in the second data unit set, the second protocol entity indicates to the first protocol entity the successful transmission of a corresponding data unit in the first data unit set.

As a sub-embodiment of the above two embodiments, the first protocol entity is a PDCP entity and the second protocol entity is an AM RLC entity.

As an embodiment, the peer entity of the first protocol entity send a status PDU; the status PDU indicates whether one or a portion of the data unit in the first data unit set is successfully transmitted.

As a sub-embodiment of the above embodiment, the peer entity of the first protocol entity periodically sends a status PDU.

As a sub-embodiment of the above embodiment, the peer entity of the first protocol entity is triggered by an event to send a status PDU.

As a sub-embodiment of the above embodiment, the first protocol entity sends a request to a peer entity of the first protocol entity, the request being used to trigger the counter-end entity feedback status PDU of the first protocol entity.

As an embodiment, the event includes data recovery.

As an embodiment, the event includes path switching.

As an embodiment, after the first data unit is successfully transmitted, the first data unit is discarded from the first protocol entity.

As an embodiment, after the first data unit is successfully transmitted, the data unit generated by the first data unit is discarded from the second protocol entity.

### Embodiment 10

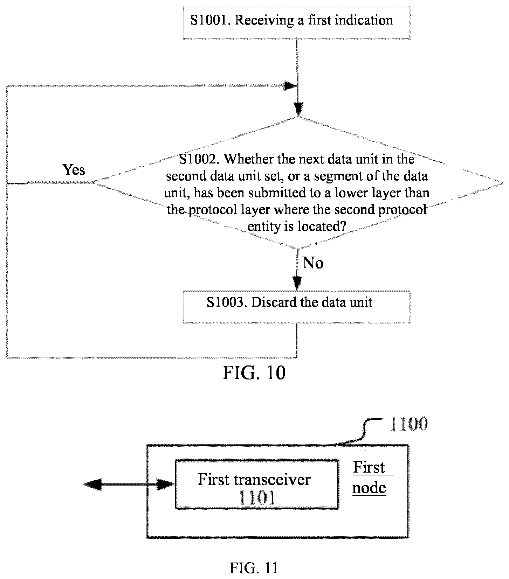

Embodiment 10 exemplifies a processing flow diagram in a second protocol entity according to one embodiment of the present application, as shown in FIG. 10.

In Embodiment 10, receives a first indication in Step S1001; determines whether the next data unit in the second data unit set, or a segment of the data unit, has been submitted to a lower layer than the protocol layer where the second protocol entity is located in Step S1002. If yes, skip back to Step S1002 and if no, perform Step S1003; discards the data unit in Step S1003.

As an embodiment, the data units in the second data unit set are submitted to the second protocol entity in an order that determines whether the data unit or the segment of the data unit has been submitted to a layer below the protocol layer where the second protocol entity is located.

### Embodiment 11

Embodiment 11 illustrates a structural block diagram of a processing apparatus in a first node according to an embodiment of the present application, as shown in FIG. 11.

In FIG. 11, the first node processing apparatus 1100 includes a first transceiver 1101. The first node 1100 is a UE, or the first node 1100 is a base station.

In Embodiment 11, the transceiver 1101 receiving a first data unit set at a first protocol entity; starting a first timer as a response to receive the first data unit; executing a first operation set as a response to the first timer expiration, the first operation set includes sending a first indication to a second protocol entity, the first indication is used to indicate discarding a second data unit set; wherein the first data unit is one data unit in the first data unit set; at least part of the data unit in the first data unit set is used to generate the second data unit set; the first protocol entity is configured to non-signaling radio bearer; the protocol layer in which the first protocol entity is located is above the protocol layer in which the second protocol entity is located; and the first protocol entity is a protocol entity in the layer above MAC.

As an embodiment, the first identity is used to indicate the first data unit set; wherein the first identity is used to indicate the first data unit set comprises: Each data unit in the first data unit set includes the first identity.

As an embodiment, at least the first information set is used to indicate the first data unit set; wherein the first information set includes at least two of the following three: a start identity, an end identity, and a total number of data units.

As an embodiment, the first transceiver 1101 discards a third data unit set at the second protocol entity; wherein the third data unit set is a subset of the second data unit set, any data unit in the third data unit set or a segment of the data unit has not been submitted to a lower layer than the protocol layer where the second protocol entity is located.

As an embodiment, the reception time of the first data unit is no later than the reception times of the other data units in the first data unit set other than the first data unit.

As an embodiment, each data unit in the first data unit set includes a second identity, the value of the second identity of the first data unit is not greater than the value of the second identity of the data unit in the first data unit set other than the first data unit.

As an embodiment, the first operation set includes discarding a fourth data unit set by the first protocol entity; wherein the fourth data unit set includes data units in the first data unit set that are not submitted to the second protocol entity.

As an embodiment, the first transceiver 1101 includes the receiver 454 (including the antenna 452), the receiving processor 456, the multi-antenna receiving processor 458, and the controller/processor 459 in FIG. 4 of the present application.

As an embodiment, the first transceiver 1101 includes at least one of the receiver 454 (including the antenna 452), the receiving processor 456, the multi-antenna receiving processor 458, or the controller/processor 459 in FIG. 4 of the present application.

As an embodiment, the first transceiver 1101 includes the receiver 454 (including the antenna 452), the transmitting processor 468, the multi-antenna transmitting processor 457, and the controller/processor 459 in FIG. 4 of the present application.

As an embodiment, the first transceiver 1101 includes at least one of the receiver 454 (including the antenna 452), the transmitting processor 468, the multi-antenna transmitting processor 457, and the controller/processor 459 in FIG. 4 of the present application.

As an embodiment, the first transceiver 1101 includes the controller/processor 459 in FIG. 4 of the present application.

Those of ordinary skill in the art may understand that all or part of the steps in the above described methods can be accomplished by instructing relevant hardware through a program that can be stored in computer-readable storage media, such as read only memory, hard disk, or optical disk. Optionally, the steps of the above embodiments, in whole or in part, may also be implemented using one or more integrated circuits. Accordingly, the various module units in the above embodiments may be implemented in the form of hardware or in the form of software function modules. The present application is not limited to the combination of software and hardware of any particular form. The first-type communication node or UE or terminal in the present application includes, but is not limited to, cell phones, tablets, notebooks, network cards, low-power devices, enhanced Machine Type Communication (eMTC) devices, NB-IoT devices, in-vehicle communication devices, aircraft, drones, remotely controlled aircraft and other wireless communication devices. The second-type communication node or base station or network-side device in the present application includes but is not limited to macro cell base stations, micro cell base stations, femtocell base stations, relay base stations, eNBs, gNBs, transmission receiving nodes Transmission and Reception Point (TRP), relaying satellites, satellite base stations, air base stations, test devices, e.g., transmission devices that simulate part of base stations, signaling testers and other wireless communication devices.

Those skilled in the art will understand that the present disclosure can be implemented in other specific forms without departing from its core or essential characteristics. Thus, the presently disclosed embodiments should in any event be considered descriptive rather than restrictive. The scope of the disclosure is determined by the appended claims, not by the preceding description, and all variations within their equivalent meaning and area are considered to be included therein.

## Claims

1. A first node for wireless communication, wherein it comprises:
a first transceiver receiving a first data unit set in a first protocol entity; starting a first timer as a response to receive a first data unit; executing a first operation set as a response to the first timer expiration, the first operation set sending a first indication to a second protocol entity, the first indication is used to indicate discarding a second data unit set;
wherein the first data unit is one data unit in the first data unit set; at least part of the data unit in the first data unit set is used to generate the second data unit set; the first protocol entity is configured to non-signaling radio bearer; the protocol layer in which the first protocol entity is located is above the protocol layer in which the second protocol entity is located; and the first protocol entity is a protocol entity in the layer above MAC.

2. The first node according to Claim 1, wherein the first identity is used to indicate the first data unit set;
wherein the first identity is used to indicate that the first data unit set comprises: Each data unit in the first data unit set includes the first identity.

3. The first node according to Claim 1 or 2, wherein at least the first information set is used to indicate the first data unit set;
wherein the first information set includes at least two of the following three: a start identity, an end identity, and a total number of data units.

4. The first node according to any one of Claims 1-3, wherein it comprises:
the first transceiver discarding a third data unit set at the second protocol entity;
wherein, the third data unit set is a subset of the second data unit set, any data unit in the third data unit set or a segment of the data unit has not been submitted to a lower layer than the protocol layer where the second protocol entity is located.

5. The first node according to any one of Claims 1-4, wherein the time of receipt of the first data unit is no later than the time of receipt of other data units in the first data unit set other than the first data unit.

6. The first node according to any one of Claims 1-4, wherein each data unit in the first data unit set includes a second identity, and a value of the second identify of the first data unit is not greater than the values of the second identity of the other data units in the first data unit set other than the first data unit.

7. The first node according to any one of Claims 1-6, wherein the first operation set includes discarding a fourth data unit set by the first protocol entity;
wherein, the fourth data unit set includes data units in the first data unit set that are not submitted to the second protocol entity.

8. A method used in a first node for wireless communication, comprising:
receiving a first data unit set at a first protocol entity;
starting a first timer as a response to receive a first data unit;
executing a first operation set as a response to the first timer expiration, the first operation set sending a first indication to a second protocol entity, the first indication is used to indicate discarding a second data unit set;
wherein the first data unit is one data unit in the first data unit set; at least part of the data unit in the first data unit set is used to generate the second data unit set; the first protocol entity is configured to non-signaling radio bearer; the protocol layer in which the first protocol entity is located is above the protocol layer in which the second protocol entity is located; and the first protocol entity is a protocol entity in the layer above MAC.

9. The method in the first node according to Claim 8, wherein the first identity is used to indicate the first data unit set;
wherein the first identity is used to indicate that the first data unit set comprises: Each data unit in the first data unit set includes the first identity.

10. The method in the first node accord to Claim 8 or 9, wherein at least the first information set is used to indicate the first data unit set;
wherein the first information set includes at least two of the following three: a start identity, an end identity, and a total number of data units.
